(19) Europäisches Patentamt
European Patent Office
Office européen des brevets

(11) **EP 4 246 363 A1**

(12) **EUROPEAN PATENT APPLICATION**
published in accordance with Art. 153(4) EPC

(43) Date of publication:
**20.09.2023 Bulletin 2023/38**

(21) Application number: **21903179.6**

(22) Date of filing: **24.11.2021**

(51) International Patent Classification (IPC):
***G06F 30/27*** (2020.01)

(52) Cooperative Patent Classification (CPC):
**G06F 30/10; G06F 30/27; G06Q 10/04**

(86) International application number:
**PCT/JP2021/042983**

(87) International publication number:
**WO 2022/124075 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.12.2020 JP 2020205027**

(71) Applicant: **Resonac Corporation
Tokyo 105-8518 (JP)**

(72) Inventor: **HANAOKA Kyohei
Tokyo 105-8518 (JP)**

(74) Representative: **Berggren Oy
P.O. Box 16
Eteläinen Rautatiekatu 10A
00101 Helsinki (FI)**

(54) **DESIGN ASSITANCE DEVICE, DESIGN ASSITANCE METHOD, AND DESIGN ASSITANCE PROGRAM**

(57)     A design assistance device according to one embodiment, includes: a data acquisition unit acquiring performance data including a design parameter group and an observation value of a characteristic item; a model construction unit constructing a prediction model for predicting the observation value of the characteristic item as a probability distribution or the like, on the basis of the design parameter group; an acquisition function construction unit constructing an acquisition function for each of the characteristic items; a design parameter group candidate generation unit generating a plurality of design parameter group candidates by multi-objective optimization of a plurality of acquisition functions; a selection unit calculating a total achievement probability with respect to target values of all of the characteristic items, on the basis of the probability distribution or the like of the observation value obtained by inputting the design parameter group candidate to the prediction model, to select at least one design parameter group candidate with the highest total achievement probability; and an output unit outputting the design parameter group candidate.

**Fig.2**

EP 4 246 363 A1

**Description**

**Technical Field**

One aspect of the present disclosure relates to a design assistance device, a design assistance method, and a design assistance program.

**Background Art**

Product design using machine learning has been studied. As one field of the product design, for example, in the design of a functional material, for example, a model for estimating the characteristic of a material is constructed by machine learning using learning data including a pair of a compound ratio of a raw material and a characteristic relevant to an experimented or produced material, and the characteristic is predicted for a compound ratio of an unexperimented raw material. By making an experiment plan with such a prediction of the characteristic, parameters such as the characteristic of the material and the compound ratio of the raw material can be efficiently optimized, and a development efficiency is improved. In addition, as such an optimization method, it is known that Bayesian optimization is effective, and a design device outputting a design value by using the Bayesian optimization is known.

**Citation List**

**Patent Literature**

Patent Literature 1: Japanese Unexamined Patent Publication No. 2020-52737

**Summary of Invention**

**Technical Problem**

On the other hand, in the product development of the material or the like, in order to improve a plurality of characteristics changed in accordance with a design variable in a state where a plurality of object variables (characteristics) are given, the plurality of object variables are optimized. This is referred to as multi-objective optimization. In a case where there is a trade-off between the object variables, there are a plurality of optimal solutions (pareto solutions), which are not set to one solution. For example, in a case where a target value is set for each of the object variables, in order to obtain the optimal pareto solution, it is considered to follow an approach of obtaining a number of pareto solutions and selecting a pareto solution close to a design target. However, in such an approach, it is necessary to evaluate a number of objective functions, and a processing load thereof becomes enormous, which is not realistic. Such problems are not limited to material design, but are common in general product design.
Therefore, the present invention has been made in consideration of the problems described above, and an object thereof is to make the optimization of the characteristic of a product or the like configuring an object variable and a design variable in a production process of a product, an in-process product, a half-finished product, a component, or a trial product available with a low load by fewer experiments.

**Solution to Problem**

A design assistance device according to one aspect of the present disclosure is a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the device including: a data acquisition unit acquiring a plurality of performance data pieces including the design parameter group and an observation value of each of the plurality of characteristic items, for the produced product, in-process product, half-finished product, component, or trial product; a model construction unit constructing a prediction model for predicting the observation value of the characteristic item as a probability distribution or an approximate or alternative index thereof on the basis of the design parameter group, on the basis of the performance data; an acquisition function construction unit constructing an acquisition function having the design parameter group as input and an index value of the design parameter group relevant to improvement of the characteristic indicated in the characteristic item as output, for each of the characteristic items, on the basis of at least the prediction model; a design parameter group candidate generation unit generating a plurality of design parameter group candidates by multi-objective optimization for the design parameter group having output of each of a plurality of acquisition functions as an object variable; a selection unit calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and an output unit outputting the selected design parameter group candidate.

A design assistance method according to one aspect of the present disclosure is a design assistance method in a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the method including: a data acquisition step of acquiring a plurality of performance data pieces including the design parameter group and an observation value of each of the plurality of characteristic items, for the produced product, in-process product, half-finished product, component, or trial product; a model construction step of constructing a prediction model for predicting the observation value of the characteristic item as a probability distribution or an approximate or alternative index thereof on the basis of the design parameter group, on the basis of the performance data; an acquisition function construction step of constructing an acquisition function having the design parameter group as input and an index value of the design parameter group relevant to improvement of the characteristic indicated in the characteristic item as output, for each of the characteristic items, on the basis of at least the prediction model; a design parameter group candidate generation step of generating a plurality of design parameter group candidates by multi-objective optimization for the design parameter group having output of each of a plurality of acquisition functions as an object variable; a selection step of calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and an output step of outputting the selected design parameter group candidate.

A design assistance program according to one aspect of the present disclosure is a design assistance program for causing a computer to function as a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the design assistance program causing the computer to attain: a data acquisition function of acquiring a plurality of performance data pieces including the design parameter group and an observation value of each of the plurality of characteristic items, for the produced product, in-process product, half-finished product, component, or trial product; a model construction function of constructing a prediction model for predicting the observation value of the characteristic item as a probability distribution or an approximate or alternative index thereof on the basis of the design parameter group, on the basis of the performance data; an acquisition function construction function of constructing an acquisition function having the design parameter group as input and an index value of the design parameter group relevant to improvement of the characteristic indicated in the characteristic item as output, for each of the characteristic items, on the basis of at least the prediction model; a design parameter group candidate generation function of generating a plurality of design parameter group candidates by multi-objective optimization for the design parameter group including output of a plurality of acquisition functions as an object variable; a selection function of calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and an output function of outputting the selected design parameter group candidate.

According to such an aspect, the prediction model for predicting the observation value of the characteristic item is constructed on the basis of the performance data. Since such a prediction model predicts the observation value as the probability distribution or the approximate or alternative index thereof, the achievement probability with respect to the target value of the characteristic item can be calculated in accordance with the given design parameter group candidate. In addition, the acquisition function is constructed for each of the characteristic items, a pareto solution obtained by the multi-objective optimization for the design parameter group including the output of the plurality of acquisition functions as the object variable can be acquired as the design parameter group candidate. Then, the total achievement probability obtained by inputting the acquired design parameter group candidate to the prediction model of each of the characteristic items is calculated, and at least one design parameter group candidate with the highest total achievement probability is output. Accordingly, it is possible to obtain the design parameter group with a possibility that a more suitable characteristic is obtained, and optimize a plurality of characteristics of a product to be produced.

In the design assistance device according to another aspect, the prediction model may be a regression model or a classification model having the design parameter group as input and the probability distribution of the observation value as output, and the model construction unit may construct the prediction model by machine learning using the performance data.

According to such an aspect, since the prediction model is constructed as a predetermined regression model or classification model, the prediction model capable of acquiring the probability distribution or the approximate or alternative index thereof of the observation value of the characteristic item, is obtained.

In the design assistance device according to another aspect, the prediction model may be a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of a prediction of a plurality of predictors constructed in different conditions.

According to such an aspect, the prediction model capable of predicting the observation value of the characteristic item based on the design parameter group as the probability distribution or the approximate or alternative index thereof is constructed.

In the design assistance device according to another aspect, the prediction model may be a single task model for predicting the observation value of one characteristic item as the probability distribution or the approximate or alternative index thereof, or a multitask model for predicting the observation values of a plurality of characteristic items as the probability distribution or the approximate or alternative index thereof.

According to such an aspect, since the prediction model can be constructed by the multitask model or the single task model suitably configured in accordance with the properties of the characteristic item, a prediction accuracy of the observation value by the prediction model can be improved.

In the design assistance device according to another aspect, the design parameter group candidate generation unit may generate a plurality of design parameter group candidates by implementing multi-objective optimization according to a predetermined first method of the multi-objective optimization once, or may generate a plurality of design parameter group candidates by performing multi-objective optimization according to a second method of the multi-objective optimization different from the first method a plurality of times, in different conditions.

According to such an aspect, since the method of the multi-objective optimization can be suitably adopted, a plurality of suitable design parameter group candidates can be obtained.

In the design assistance device according to another aspect, the design parameter group candidate generation unit may implement the multi-objective optimization for the design parameter group by applying a genetic algorithm to the plurality of acquisition functions.

According to such an aspect, the optimization for the design parameter group including the output of each of the plurality of acquisition functions as the object variable is accurately implemented.

In the design assistance device according to another aspect, the design parameter group candidate generation unit may generate one predetermined objective function for treating the multi-objective optimization as single objective optimization, on the basis of the plurality of acquisition functions, and may generate a plurality of design parameter group candidates by performing the single objective optimization for the design parameter group including output of the objective function as the object variable a plurality of times, in different conditions.

According to such an aspect, since the multi-objective optimization relevant to the plurality of acquisition functions is attained by implementing the single objective optimization including the output of one objective function as the object variable, the design parameter group candidate can be easily obtained.

In the design assistance device according to another aspect, the selection unit may calculate the achievement probability with respect to the target value of each of the characteristic items, on the basis of the probability distribution or the approximate or alternative index thereof of the observation value obtained by inputting the design parameter group candidate to the prediction model of each of the characteristic items, and may calculate the total achievement probability for each of the design parameter group candidates, on the basis of the achievement probability of each of the characteristic items.

According to such an aspect, since the probability distribution or the like of the observation value can be predicted for each of the characteristic items, the achievement probability for each of the characteristic items can be calculated with a high accuracy. Then, since the total achievement probability is obtained by calculating the achievement probability for each of the calculated characteristic items, the total achievement probability for each of the design parameter group candidates can be easily and accurately calculated.

In the design assistance device according to another aspect, the selection unit may select a plurality of design parameter group candidates including the design parameter group candidate with the highest total achievement probability from the plurality of design parameter group candidates by a predetermined algorithm.

According to such an aspect, a plurality of design parameter groups available to the next experiment can be easily obtained.

In the design assistance device according to another aspect, the acquisition function construction unit may construct the acquisition function including any one of lower confidence bound (LCB), expected improvement (EI), and probability of improvement (PI).

According to such an aspect, the acquisition function suitable for the evaluation of the improvement of the characteristic indicated in each of the characteristic items is constructed.

In the design assistance device according to another aspect, the acquisition function construction unit may construct the acquisition function including a cost value relevant to a cost including at least any one of time and a cost according to the production of the product, the in-process product, the half-finished product, the component, or the trial product, generated in accordance with the design parameter group, the acquisition function for outputting the index value indicating that a degree of suitability of the design parameter group decreases as the cost value increases.

According to such an aspect, when generating the design parameter group candidate, the cost according to the production of the product or the like is considered. Accordingly, it is possible to reduce the cost relevant to the production of the product or the like, an experiment, and the like.

**Advantageous Effects of Invention**

According to one aspect of the present disclosure, the optimization of the characteristic of the product or the like configuring the object variable and the design variable in the production process of the product, the in-process product, the half-finished product, the component, or the trial product is available with a low load by fewer experiments.

**Brief Description of Drawings**

FIG. 1 is a diagram illustrating an outline of a material design process to which a design assistance device according to an embodiment is applied.

FIG. 2 is a block diagram illustrating an example of a functional configuration of the design assistance device according to the embodiment.

FIG. 3 is a hard block diagram of the design assistance device according to the embodiment.

FIG. 4 is a diagram illustrating an example of a design parameter group relevant to a produced material.

FIG. 5 is a diagram illustrating an example of an observation value relevant to the produced material.

FIG. 6 is a flowchart illustrating an optimization process of a characteristic item and a design parameter in material design.

FIG. 7 is a flowchart illustrating an example of contents of a design assistance method in the design assistance device according to the embodiment.

FIG. 8 is a diagram illustrating a configuration of a design assistance program.

**Description of Embodiments**

Hereinafter, an embodiment of the present invention will be described in detail with reference to the attached drawings. Note that, in the description of the drawings, the same reference numerals will be applied to the same or equivalent elements, and the repeated description will be omitted.

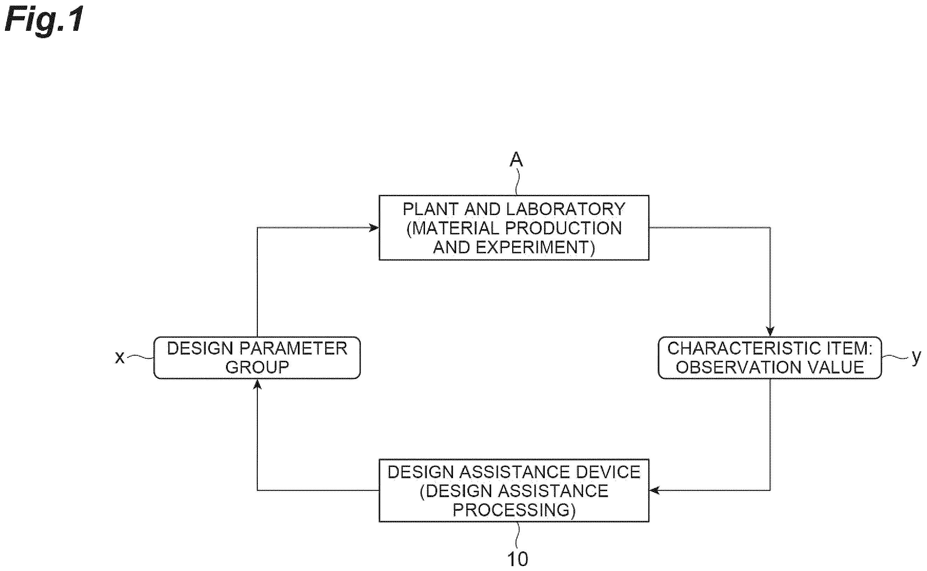

FIG. 1 is a diagram illustrating the outline of a material design process, which is an example of a design process of a product, an in-process product, a half-finished product, a component, or a trial product to which a design assistance device according to an embodiment is applied. Note that, hereinafter, the "product, the in-process product, the half-finished product, the component, or the trial product" will be described as the "product or the like". A design assistance device 10 according to this embodiment can be applied to a design process of any product or the like including a plurality of characteristic items indicating the characteristic of the product or the like and a target value of each of the characteristic items. The design assistance device 10 can be applied to a method for optimizing a design parameter and an object variable of the product or the like by repeating the determination of the design parameter and the production of the product, the in-process product, the half-finished product, the component, or the trial product based on the determined design parameter. Specifically, the design assistance device 10, for example, can be applied to the design of a product such as a vehicle and a chemical, the optimization of a molecular structure of the chemical, and the like, in addition to the development and the design of the material. In this embodiment, as described above, design assistance processing of the design assistance device 10 will be described with an example of the material design as an example of the design of the product or the like.

As illustrated in FIG. 1, the design assistance processing of the design assistance device 10 is applied to material production and an experiment in a plant, a laboratory A, and the like. That is, the material is produced in accordance with a set design parameter group x, in the plant, the laboratory A, and the like, and an observation value y of a plurality of characteristic items indicating the characteristic of the material is acquired on the basis of the produced material. Note that, the material production and the experiment in the plant and the laboratory A may be a simulation. In this case, the design assistance device 10 provides the design parameter group x for executing the next simulation.

The design assistance device 10 optimizes the plurality of characteristic items and the design parameter, on the basis of performance data including the design parameter group x and the observation value y of the plurality of characteristic items of the material produced on the basis of the design parameter group x. Specifically, the design assistance device 10 outputs the design parameter group x for the next production and experiment, with a possibility that a more suitable characteristic is obtained, on the basis of the design parameter group x and the observation value y relevant to the produced material.

For example, the design assistance device 10 of this embodiment is applied to achieve a plurality of target characteristics by tuning a plurality of design variables, in the design of a material product. As an example of the design of the material product, in a case where a certain material is produced by mixing a plurality of polymers and additives, the design assistance device 10 sets the design parameter group such as a compound amount of each of the polymers and additives to the design variable, sets the observation value such as an elastic modulus and a coefficient of thermal expansion, which are the characteristic item, to the object variable, to be used for the tuning of the design parameter group for achieving the target value of the plurality of characteristic items.

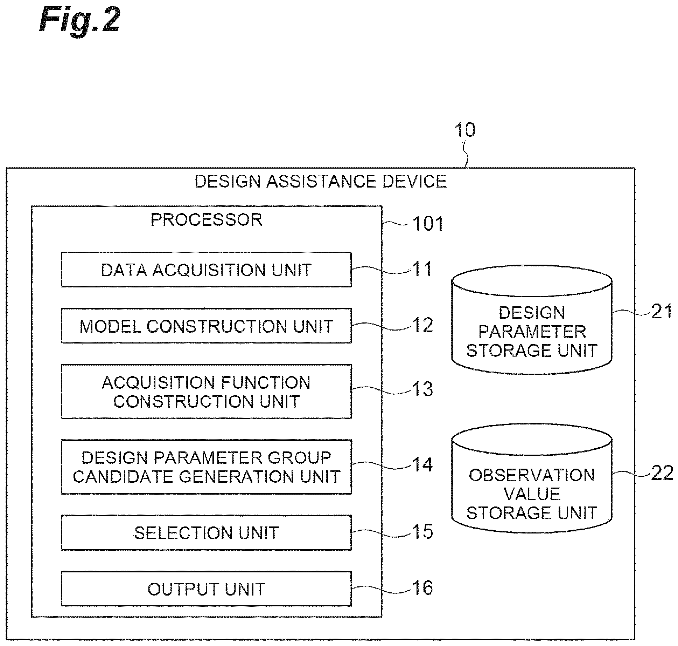

FIG. 2 is a block diagram illustrating an example of a functional configuration of the design assistance device according to embodiment. The design assistance device 10 is a device obtaining a plurality of design parameters satisfying the target value set for each of the plurality of characteristic items indicating the characteristic of the material, in the design of the material produced on the basis of the design parameter group including the plurality of design parameters. As illustrated in FIG. 2, the design assistance device 10 may include function units configured in a processor 101, a design parameter storage unit 21, and an observation value storage unit 22. Each of the function units will be described below.

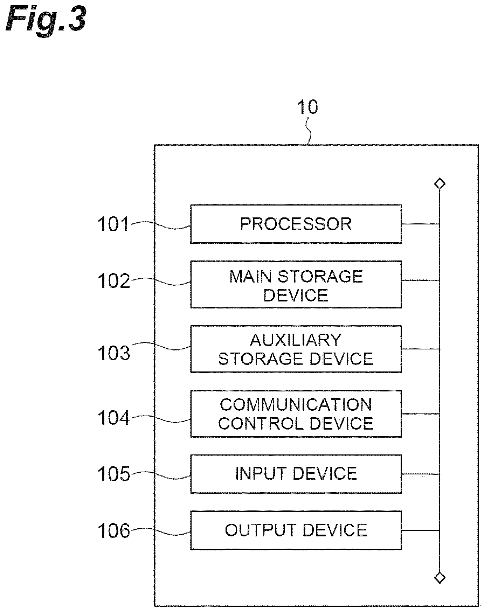

FIG. 3 is a diagram illustrating an example of a hardware configuration of a computer 100 configuring the design assistance device 10 according to the embodiment. Note that, the computer 100 may configure the design assistance device 10.

As an example, the computer 100 includes the processor 101, a main storage device 102, an auxiliary storage device 103, and a communication control device 104, as a hardware constituent. The computer 100 configuring the design assistance device 10 may further include an input device 105 such as a keyboard, a touch panel, or a mouse, which is an input device, and an output device 106 such as a display.

The processor 101 is an arithmetic device executing an operating system and an application program. Examples of the processor include a central processing unit (CPU) and a graphics processing unit (GPU), and the type of processor 101 is not limited thereto. For example, the processor 101 may be a combination of a sensor and a dedicated circuit. The dedicated circuit may be a programmable circuit such as a field-programmable gate array (FPGA), or may be other types of circuits.

The main storage device 102 is a device storing a program for attaining the design assistance device 10 or the like, an arithmetic result output from the processor 101, and the like. The main storage device 102, for example, includes at least one of a read only memory (ROM) and a random access memory (RAM).

In general, the auxiliary storage device 103 is a device capable of storing more massive amount of data than the main storage device 102. The auxiliary storage device 103, for example, includes a non-volatile storage medium such as a hard disk and a flash memory. The auxiliary storage device 103 stores a design assistance program P1 for allowing the computer 100 to function as the design assistance device 10 or the like, and various data pieces.

The communication control device 104 is a device executing data communication with respect to other computers via a communication network. The communication control device 104, for example, includes a network card or a wireless communication module.

Each functional element of the design assistance device 10 is attained by reading the corresponding program P1 on the processor 101 or the main storage device 102 to allow the processor 101 to execute the program. The program P1 includes a code for attaining each functional element of the corresponding server. The processor 101 operates the communication control device 104, in accordance with the program P1, to execute data read and write in the main storage device 102 or the auxiliary storage device 103. According to such processing, each functional element of the corresponding server is attained.

The program P1 may be provided after being fixedly recorded in a tangible recording medium such as a CD-ROM, a DVD-ROM, and a semiconductor memory. Alternatively, at least one of such programs may be provided as a data signal superimposed on a carrier wave via a communication network.

Referring to FIG. 2 again, the design assistance device 10 includes a data acquisition unit 11, a model construction unit 12, an acquisition function construction unit 13, a design parameter group candidate generation unit 14, a selection unit 15, and an output unit 16. As illustrated in FIG. 2, the design parameter storage unit 21 and the observation value storage unit 22 may be configured in the design assistance device 10, or may be configured as other devices accessible from the design assistance device 10.

The data acquisition unit 11 acquires a plurality of performance data pieces relevant to the produced material. The performance data includes a pair of the design parameter group and the observation value of each of the plurality of characteristic items. The design parameter storage unit 21 is a storage means storing the design parameter group in the performance data, and for example, may be configured in the main storage device 102, the auxiliary storage device 103, and the like. The observation value storage unit 22 is a storage means storing the observation value in the performance data.

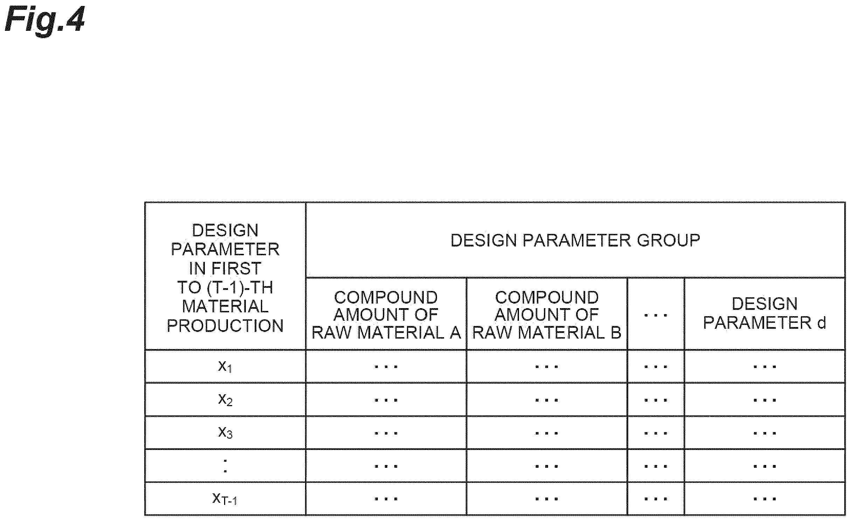

FIG. 4 is a diagram illustrating an example of the design parameter group stored in the design parameter storage unit 21. As illustrated in FIG. 4, the design parameter storage unit 21 stores a design parameter group $x_t$ in the first ($t = 1$) to ($T-1$)-th ($t = T-1$) material production. As an example, the design parameter group x may include a compound amount of a raw material A, a compound amount of a raw material B, and a design parameter d, or may configure vector data with a dimension number according to the number of design parameters. In addition to those exemplified, for example, the design parameter may be non-vector data such as a molecular structure and an image, and the like. In addition, in the case of addressing the problem of selecting the optimal molecules from a plurality of types of molecules, the design parameter may be data indicating options of the plurality of molecules.

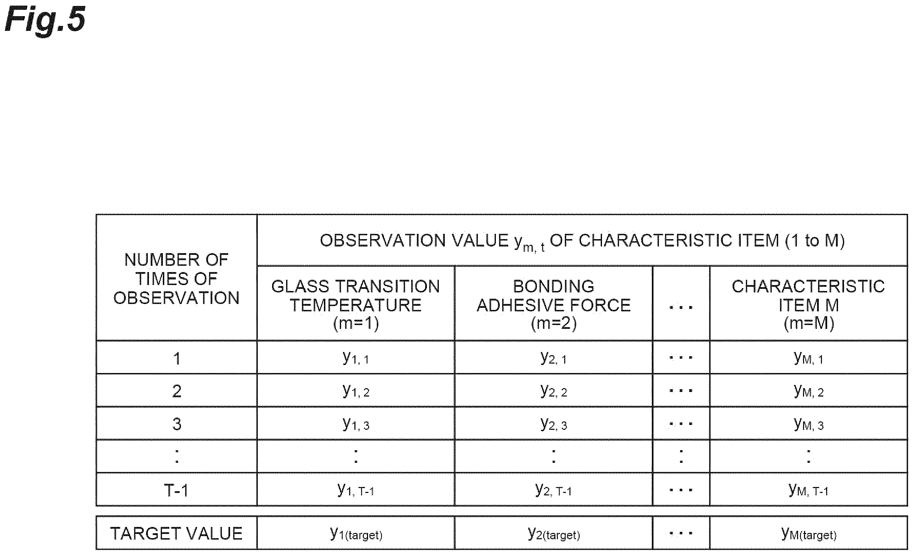

FIG. 5 is a diagram illustrating an example of the observation value y stored in the observation value storage unit 22. As illustrated in FIG. 5, the observation value storage unit 22 stores an observation value $y_{m,t}$ of a plurality of characteristic items ($m = 1$ to $M$) indicating the characteristic of the material produced in the first ($t = 1$) to ($T-1$)-th ($t = T-1$) material production. As an example, the characteristic item m may include a glass transition temperature, a bonding adhesive force, and a characteristic item M. In addition, in each of the characteristic items, a target value $y_{m(target)}$ is set. A pair of the design parameter group xt and the observation value $y_{m,t}$ configure the performance data.

The design assistance device 10 obtains a design parameter group $x_T$ for the T-th material production, on the basis of the performance data in the first ($t = 1$) to ($T-1$)-th ($t = T-1$) material production. The design parameter group $x_T$ is a parameter group in which the observation value of each of the characteristic items satisfies each of the target values $y_{m(target)}$, or a parameter group in which the observation value of each of the characteristic items is closer to each of the target values $y_{m(target)}$.

The model construction unit 12 constructs a prediction model, on the basis of the performance data. The prediction model is a model for predicting the observation value $y_m$ of the characteristic item m as a probability distribution or an approximate or alternative index thereof, on the basis of the design parameter group x. A model configuring the prediction model may be a model capable of predicting the observation value $y_m$ as the probability distribution or the approximate or alternative index thereof, but the type thereof is not limited. The prediction model for predicting the observation value $y_m$ as the alternative index of the probability distribution, for example, predicts the probability distribution of the observation value by using a distribution of a prediction value of a predictor configuring an ensemble (a random forest), a distribution obtained by a Monte Carlo dropout (a neural network), a distribution of the prediction of a plurality of predictors constructed in different conditions (any machine learning method), and the like as the alternative index.

For example, the prediction model may be a regression model including the design parameter x as input and the probability distribution of the observation value $y_m$ as output. In a case where the prediction model is the regression model, the prediction model, for example, may include any one of a Gaussian process regression, a random forest, and a neural network. The model construction unit 12 may construct the prediction model by a known machine learning method using the performance data. The model construction unit 12 may construct the prediction model by a machine learning method for updating the parameter of the prediction model by applying the performance data to the prediction model.

In addition, the prediction model may be a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of the prediction of a plurality of predictors constructed in different conditions. The prediction of the probability distribution or the approximate or alternative index thereof of the observation value can be obtained by a model-specific method. The probability distribution or the approximate or alternative index thereof of the observation value can be obtained on the basis of the posterior distribution of the prediction value in the case of a Gaussian process regression and a Bayesian neural network, can be obtained on the basis of the distribution of the prediction of the predictor configuring the ensemble in the case of a random forest, can be obtained on the basis of the prediction interval and the confidence interval in the case of a linear regression, and can be obtained on the basis of the Monte Carlo dropout in the case of a neural network. Here, a calculation method of the distribution of the observation value with respect to each of the machine learning models, or the alternative index thereof is not limited to the method described above.

In addition, any model may be expanded to the model capable of predicting the probability distribution or the alternative index thereof of the observation value. Examples of the model include a model using the distribution of the prediction value of each model, which is obtained by constructing a plurality of data sets by a bootstrap method or the like and constructing the prediction model with respect to each of the plurality of data sets, as the alternative index of the probability distribution of the observation value. Here, a method for expanding the machine learning model to the model capable of predicting the probability distribution or the alternative index thereof of the observation value, is not limited to the method described above.

In addition, the prediction model may be constructed by bagging ensemble learning such as a linear regression, a PLS regression, a Gaussian process regression, and a random forest, boosting ensemble learning such as gradient boosting, a support-vector machine, a neural network, and the like.

In the prediction model constructed as the Gaussian process regression, the probability distribution of the observation value is predicted by inputting the design parameter group x in the performance data configuring an explanatory variable of training data, the observation value y configuring the object variable, and the design parameter x to be predicted to the model.

In addition, the model construction unit 12 may tune the hyperparameter of the prediction model by a known hyperparameter tuning method. That is, the model construction unit 12 may update the hyperparameter of the prediction model constructed by the Gaussian process regression with maximum likelihood estimation using a vector representing the design parameter group x, which is the explanatory variable in the performance data, and the observation value y, which is the object variable.

In addition, the prediction model may be constructed by a classification model. In a case where the prediction model is the classification model, the model construction unit 12 is capable of constructing the prediction model by a known machine learning method in which the evaluation of the probability distribution using the performance data can be performed.

As described above, since the model construction unit 12 constructs the prediction model with a predetermined regression model or classification model, it is possible to acquire the probability distribution of the observation value of the characteristic item, on the basis of any design parameter group x.

In addition, the prediction model may be a single task model for predicting the observation value of one characteristic item as the probability distribution or the approximate or alternative index thereof, or a multitask model for predicting the observation value of the plurality of characteristic items as the probability distribution or the approximate or alternative index thereof. As described above, since the prediction model is constructed by the multitask model or the single task model suitably configured in accordance with the properties of the characteristic item, it is possible to improve a prediction accuracy of the observation value by the prediction model.

The acquisition function construction unit 13 constructs an acquisition function Am(x) for each of the characteristic items m, on the basis of the prediction model constructed for each of the characteristic items m. The acquisition function Am(x) is a function including the design parameter group x as input and the index value of the design parameter group relevant to the improvement of the characteristic indicated in each of the characteristic items m as output.

Specifically, the acquisition function is a function for outputting the index value indicating the degree of suitability as a solution of the design parameter group (including being close to the optimal solution or being suitable for searching for the optimal solution), in order to improve the observation value of the characteristic item predicted by the prediction model.

The acquisition function construction unit 13 may construct the acquisition function by a known function such as lower confidence bound (LCB).

LCB is used in the case of minimizing the output of the function, and a suitable design parameter is obtained by minimizing the value of LCB. In the case of constructing the acquisition function by LCB, the acquisition function construction unit 13 defines and constructs the acquisition function Am(x) as described below.

$$Am(x) = m(x) - a\sigma(x)$$

The formula of the acquisition function described above is a formula representing the lower limit of the confidence interval in the case of assuming that the observation value predicted by the prediction model follows a normal distribution, m(x) in the formula described above is the average of the predictions, $\sigma(x)$ is the variance of the predictions, and a is any parameter.

In a case where the prediction model is constructed by the Gaussian regression process, m(x) and $\sigma(x)$ are obtained by inputting the design parameter group x in the performance data configuring the explanatory variable of the training data, the observation value y configuring the object variable, and the design parameter group x to be predicted to a theoretical formula of a posterior distribution of the model of the Gaussian process regression.

In addition, the acquisition function construction unit 13 may configure the acquisition function Am(x) by a known function such as expected improvement (EI) and probability of improvement (PI).

Note that, the acquisition function construction unit 13 may construct the acquisition function including a cost function cost(x) in which a cost (time, a cost, and the like) required for the material production and the experiment based on the design parameter group x is defined. The acquisition function construction unit 13 constructs the acquisition function for outputting the index value indicating that the degree of suitability of the design parameter group x decreases as a cost value calculated by the cost function increases.

Specifically, in the case of constructing a suitable acquisition function by maximizing the output, the acquisition function construction unit 13 constructs the acquisition function for outputting a smaller index value as the cost value calculated by the cost function increases. The acquisition function construction unit 13, for example, may construct an acquisition function Am(x)' as described below.

$$Am(x)' = Am(x) - cost(x)$$

In addition, in the case of constructing a suitable acquisition function by minimizing the output, the acquisition function construction unit 13 constructs the acquisition function for outputting a larger index value as the cost value calculated by the cost function increases. For example, the acquisition function Am(x)' as described below may be constructed.

$$Am(x)' = Am(x) + cost(x)$$

Note that, the acquisition function including the cost function is not limited to the example described above, and may include a term for multiplying the index value by the cost function or the cost value, or dividing the index value by the cost function or the cost value.

As described above, since the cost according to the material production is considered in the material production and the experiment by optimizing the acquisition function in which the cost is considered, it is possible to reduce the cost relevant to the material production, the experiment, and the like.

The design parameter group candidate generation unit 14 generates a plurality of design parameter group candidates by multi-objective optimization for the design parameter group including the output of each of a plurality of acquisition functions as the object variable. The design parameter group candidate generation unit 14 may implement the multi-objective optimization by using any known method, and the method is not limited.

The design parameter group candidate generation unit 14 may generate the plurality of design parameter group candidates by performing multi-objective optimization according to a predetermined method a plurality of times, in different conditions. Specifically, the design parameter group candidate generation unit 14 obtains a design parameter group candidate by performing the multi-objective optimization of M acquisition functions ($A_1(x)$, $A_2(x)$, ..., $A_m(x)$) constructed for each of the characteristic items with respect to the design parameter group x. The design parameter group candidate generation unit 14 obtains the plurality of design parameter group candidates by implementing the multi-objective optimization a plurality of times while changing a predetermined parameter in the multi-objective optimization.

In addition, the design parameter group candidate generation unit 14 may generate the plurality of design parameter group candidates by implementing multi-objective optimization according to a predetermined method once. For example, the design parameter group candidate generation unit 14 implements the multi-objective optimization for the design parameter group by applying a genetic algorithm to the plurality of acquisition functions. In the multi-objective optimization to which the genetic algorithm is applied, it is possible to obtain the plurality of design parameter group candidates by implementing the optimization processing once.

The genetic algorithm is an algorithm for optimizing a function by repeating evaluation, selection, and a genetic operation with respect to a set of individuals (solution candidates), with the imitation of biological evolution. In the genetic algorithm, since a plurality of individuals are simultaneously evolved, it is possible to obtain a pareto solution by performing the evolution to get closer to the pareto solution while maintaining the diversity of a plurality of solution candidates. Note that, there are various genetic algorithms applicable to the multi-objective optimization, and any algorithm may be applied.

In the genetic algorithm, an initial group of a candidate set of the solution is randomly generated. The design parameter group candidate generation unit 14 may acquire the plurality of design parameter group candidates by implementing optimization with the genetic algorithm based on the randomly generated initial group a plurality of time.

In the general single objective optimization for optimizing one function, for example, it is possible to obtain the design variable optimal for obtaining a suitable object variable by a method such as a BFGS method. However, in the case of optimizing the plurality of acquisition functions, even though the explanatory variable for optimizing one function is acquired, other functions are not optimized by the explanatory variable such that there is no correlation between the functions or there is a trade-off relationship. In the multi-objective optimization, while keeping a balance in the object variables of the plurality of functions, the explanatory variable is searched such that all of the object variables of the plurality of functions have preferred values to the maximum extent. The solution obtained as the result of the multi-objective optimization is referred to as the pareto solution.

In addition, in order to generate the design parameter group candidate, the design parameter group candidate generation unit 14 may generate one predetermined objective function for treating the multi-objective optimization as the single objective optimization, on the basis of the plurality of acquisition functions. The design parameter group candidate generation unit 14 is capable of generating the plurality of design parameter group candidates by performing the single objective optimization for the design parameter group including the output of the generated objective function as the object variable a plurality of times, in different single objective function generation conditions.

As an example of the generation of a single objective function, specifically, the design parameter group candidate generation unit 14 randomly selects a random parameter group $w_m$ satisfying a condition ($w_m \geq 0$, $\Sigma_m w_m = 1$), in order for the multi-objective optimization of m acquisition functions. Then, in a case where a larger value of the acquisition function is preferable (a maximization problem), the design parameter group candidate generation unit 14 generates an objective function g(x) as described below, on the basis of the acquisition function Am(x) (m = 1, ..., M) and the random parameter group $w_m$.

$$Am'(x) = -Am(x)$$

$$g(x) = \max_m[w_m Am'(x)] + \rho\Sigma_m w_m Am'(x)$$

The objective function g(x) is a function for setting a multi-objective problem of maximizing the plurality of acquisition functions to a single objective problem of minimizing the objective function g(x).

The design parameter group candidate generation unit 14 generates the design parameter group candidate as the pareto solution by implementing the single objective optimization of the objective function g(x) as a minimization problem. Since one design parameter group candidate is generated in accordance with one random selection of the random parameter group $w_m$ (m = 1, ..., M), the design parameter group candidate generation unit 14 generates the plurality of design parameter group candidates according to the selected random parameter group $w_m$ by performing the random selection of the random parameter group $w_m$ a plurality of times.

As described above, since the multi-objective optimization relevant to the plurality of acquisition functions is attained by implementing the single objective optimization including the output of one objective function as the object variable, it is possible to easily obtain the design parameter group candidate.

The selection unit 15 calculates the total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model.

The selection unit 15 may calculate the total achievement probability on the basis of the design parameter group candidate, by using the prediction models of all of the characteristic items. In addition, the selection unit 15 may calculate the achievement probability with respect to the target value of each of the characteristic items by inputting the design parameter group candidate to each of the prediction models of each of the characteristic items, and may calculate the total achievement probability on the basis of the achievement probability of each of the characteristic items.

As described above, the prediction model is the model for predicting the observation value $y_m$ of the characteristic item m as the probability distribution or the approximate or alternative index thereof, on the basis of the design parameter group x. Accordingly, the selection unit 15 obtains the probability distribution or the approximate or alternative index thereof of the observation value of each of the characteristic items, by inputting the design parameter group candidate generated by the design parameter group candidate generation unit 14 to the prediction model of each of the characteristic items. Then, the selection unit 15 calculates an achievement probability Pm(x) for each of the characteristic items m, on the basis of the probability distribution or the approximate or alternative index thereof of the observation value of each of the characteristic items, and the target value. The achievement probability Pm(x) is a probability that the obser-

vation value $y_m$ relevant to the characteristic item m of the material produced by the design parameter group x achieves the target value $y_{m(target)}$.

The selection unit 15 calculates the total achievement probability, which is a probability that the target values of all of the characteristic items are achieved, for each of the design parameter group candidates, on the basis of the achievement probability $Pm(x)$ of each of the characteristic items m (m = 1 to M).

For example, specifically, in a case where target achievement events of the characteristic items are independent from each other, the selection unit 15 calculates a total achievement probability $P(x)$ as described below.

$$P(x) = \Pi_{1<=m<=M}Pm(x)$$

That is, the total achievement probability $P(x)$ is calculated by the infinite product of M achievement probabilities.

The selection unit 15 calculates the total achievement probability $P(x)$ of each of the plurality of design parameter group candidates x generated by the design parameter group candidate generation unit 14. Then, the selection unit 15 selects at least one design parameter group candidate with the highest calculated total achievement probability $P(x)$.

In addition, the selection unit 15 may select a plurality of design parameter group candidates including the design parameter group candidate with the highest total achievement probability from the plurality of design parameter group candidates by a predetermined algorithm.

Specifically, as an example, the selection unit 15 selects the first to N-th design parameter group candidates as described below.

First Design Parameter Group Candidate: a design parameter group candidate with the highest total achievement probability, among the plurality of design parameter group candidates,

Second Design Parameter Group Candidate: a design parameter group candidate with the highest total achievement probability, among a design parameter group candidates excluding the first design parameter group candidate and a design parameter group candidate distributed within a predetermined distance in the vicinity thereof from the plurality of design parameter group candidates,

Third Design Parameter Group Candidate: a design parameter group candidate with the highest total achievement probability, among a design parameter group candidates excluding the first and second design parameter group candidates and a design parameter group candidate distributed within a predetermined distance in the vicinity thereof from the plurality of design parameter group candidates,

..., and

N-th Design Parameter Group Candidate: a design parameter group candidate with the highest total achievement probability, among a design parameter group candidates excluding the first, second, ..., and N-1-th design parameter group candidates and a design parameter group candidate distributed within a predetermined distance in the vicinity thereof from the plurality of design parameter group candidates.

A method for performing Bayesian optimization by selecting the first to N-th design parameter group candidates as described above is referred to as batch Bayesian optimization.

The output unit 16 outputs the design parameter group candidate selected by the selection unit 15. That is, the output unit 16 outputs the design parameter group candidate obtained on the basis of the performance data in the first (t = 1) to (T-1)-th (t = T-1) material production, as the design parameter group $x_T$ for the T-th material production.

In addition, in a case where the first to N-th design parameter group candidates are selected by the selection unit 15, the output unit 16 outputs the selected design parameter group candidates as the design parameter group for the material production for N times subsequent to the (T-1)-th material production. The design parameter group for the material production for N times may be available to simultaneous experiment and material production.

An output mode is not limited, and the output unit 16, for example, outputs the design parameter group candidate by displaying the design parameter group candidate on a predetermined display device or by storing the design parameter group candidate in a predetermined storage means.

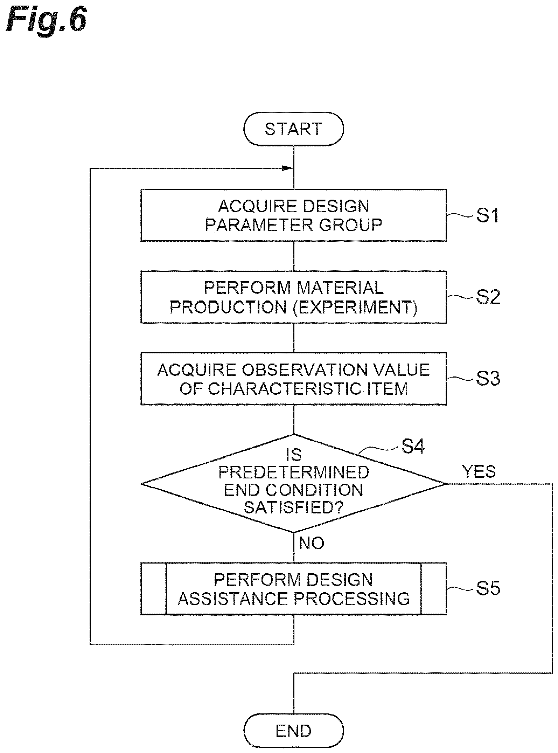

FIG. 6 is a flowchart illustrating an optimization process of the characteristic item and the design parameter group in the material design.

In step S1, the design parameter group is acquired. Here, the design parameter group to be acquired may be for the initial material production (experiment), may be a design parameter group set arbitrarily, or may be a design parameter group set on the basis of the already performed experiment or the like.

In step S2, the material production is performed. In step S3, the observation value of the characteristic item of the produced material is acquired. The pair of the design parameter group as a production condition in step S2 and the observation value of each of the characteristic items acquired in step S3 configure the performance data.

In step S4, whether a predetermined end condition is satisfied is determined. The predetermined end condition may be a condition for optimizing the design parameter group and the observation value of the characteristic item, and may be arbitrarily set. The end condition for optimization, for example, may be reaching a predetermined number of times of the production (the experiment) and the acquisition of the observation value, reaching the target value of the observation value, the convergence of the optimization, and the like. In a case where it is determined that the predetermined end condition is satisfied, the optimization process is ended. In a case where it is not determined that the predetermined end condition is satisfied, the process proceeds to step S5.

In step S5, the design assistance processing of the design assistance device 10 is performed. The design assistance processing is processing of outputting the design parameter group for the next material production. Then, the process returns to step S1 again.

Note that, in the first cycle of a processing cycle including steps S1 to S5, in a case where a plurality of pairs of the design parameter groups and the observation values of the characteristic items are obtained as the initial data, the processing of steps S1 to S4 is omitted. In a case where the initial data is not obtained, in step S1, for example, the design parameter group obtained by any method such as design of experiments and random search is acquired. After the second cycle of the processing cycle, in step S1, the design parameter group output in step S5 is acquired.

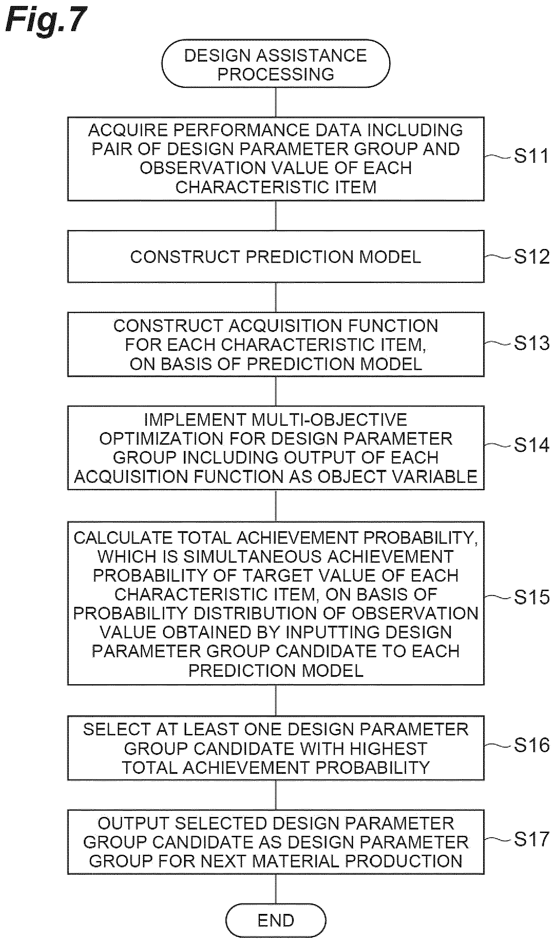

FIG. 7 is a flowchart illustrating an example of the contents of a design assistance method in the design assistance device 10 according to the embodiment, and illustrates the processing of step S5 in FIG. 6. The design assistance method is executed by reading the design assistance program P1 in the processor 101, and executing the program to attain each of the function units 11 to 16.

In step S11, the data acquisition unit 11 acquires the plurality of performance data pieces relevant to the produced material. The performance data includes the pair of the design parameter group and the observation value of each of the characteristic items.

In step S12, the model construction unit 12 constructs the prediction model, on the basis of the performance data.

In step S13, the acquisition function construction unit 13 constructs the acquisition function Am(x) for each of the characteristic items m, on the basis of the constructed prediction model.

In step S14, the design parameter group candidate generation unit 14 implements the multi-objective optimization for the design parameter group including the output of each of the plurality of acquisition functions as the object variable to acquire the plurality of design parameter group candidates.

In step S15, the selection unit 15 calculates the total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model of each of the characteristic items.

In step S16, the selection unit 15 selects at least one design parameter group candidate with the highest total achievement probability calculated in step S15.

In step S17, the output unit 16 outputs the design parameter group candidate selected in step S16 as the design parameter group for the next material production (step S1).

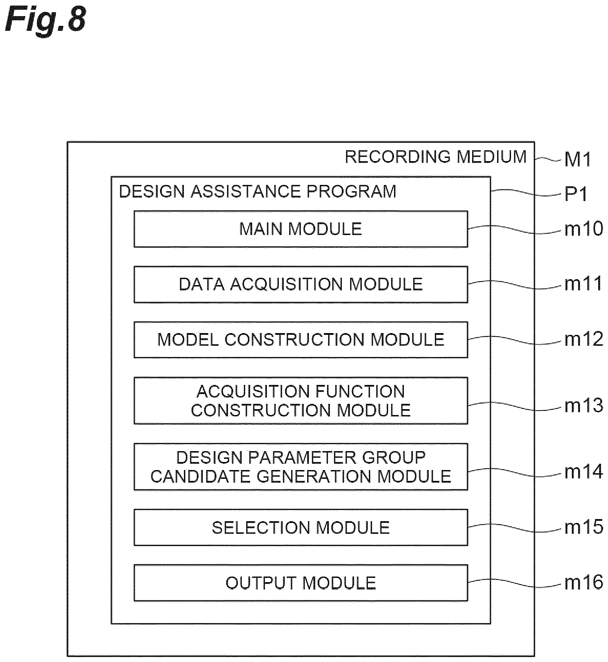

Next, a design assistance program for causing a computer to function as the design assistance device 10 of this embodiment will be described. FIG. 8 is a diagram illustrating the configuration of the design assistance program.

The design assistance program P1 includes a main module m10 comprehensively controlling the design assistance processing in the design assistance device 10, a data acquisition module m11, a model construction module m12, an acquisition function construction module m13, a design parameter group candidate generation module m14, a selection module m15, and an output module m16. Then, each function for the data acquisition unit 11, the model construction unit 12, the acquisition function construction unit 13, the design parameter group candidate generation unit 14, the selection unit 15, and the output unit 16 is attained by each of the modules m11 to m16.

Note that, the design assistance program P1 may be in a mode where the program is transmitted via a transmission medium such as a communication line, or may be in a mode where the program is stored in a recording medium M1, as illustrated in FIG. 8.

According to the design assistance device 10, the design assistance method, and the design assistance program P1 of this embodiment described above, the prediction model for predicting the observation value of the characteristic item is constructed on the basis of the performance data. Since such a prediction model predicts the observation value as the probability distribution or the approximate or alternative index thereof, it is possible to calculate the achievement probability with respect to the target value of the characteristic item, in accordance with the given design parameter group candidate. In addition, the acquisition function is constructed for each of the characteristic items, and the pareto solution obtained by the multi-objective optimization for the design parameter group including the output of the plurality of acquisition functions as the object variable can be acquired as the design parameter group candidate. Then, the total achievement probability obtained by inputting the acquired design parameter group candidate to the prediction model of each of the characteristic items is calculated, and at least one design parameter group candidate with the highest total achievement probability is output. Accordingly, it is possible to obtain the design parameter group with a possibility that a more suitable characteristic is obtained, and optimize the plurality of characteristics of the product to be produced.

The present invention has been described in detail, on the basis of the embodiment. However, the present invention is not limited to the embodiment described above. The present invention can be variously modified within a range not departing from the gist thereof.

**Reference Signs List**

10: design assistance device, 11: data acquisition unit, 12: model construction unit, 13: acquisition function construction unit, 14: design parameter group candidate generation unit, 15: selection unit, 16: output unit, 21: design parameter storage unit, 22: observation value storage unit, 100: computer, 101: processor, 102: main storage device, 103: auxiliary storage device, 104: communication control device, 105: input device, 106: output device, M1: recording medium, m10: main module, m11: data acquisition module, m12: model construction module, m13: acquisition function construction module, m14: design parameter group candidate generation module, m15: selection module, m16: output module, P1: design assistance program.

**Claims**

1. A design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the device comprising:

   a data acquisition unit acquiring a plurality of performance data pieces including the design parameter group and an observation value of each of the plurality of characteristic items, for the produced product, in-process product, half-finished product, component, or trial product;
   a model construction unit constructing a prediction model for predicting the observation value of the characteristic item as a probability distribution or an approximate or alternative index thereof on the basis of the design parameter group, on the basis of the performance data;
   an acquisition function construction unit constructing an acquisition function having the design parameter group as input and an index value of the design parameter group relevant to improvement of the characteristic indicated in the characteristic item as output, for each of the characteristic items, on the basis of at least the prediction model;
   a design parameter group candidate generation unit generating a plurality of design parameter group candidates by multi-objective optimization for the design parameter group having output of each of a plurality of acquisition functions as an object variable;
   a selection unit calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and
   an output unit outputting the selected design parameter group candidate.

2. The design assistance device according to claim 1,

   wherein the prediction model is a regression model or a classification model having the design parameter group as input and the probability distribution of the observation value as output, and
   the model construction unit constructs the prediction model by machine learning using the performance data.

3. The design assistance device according to claim 2,
   wherein the prediction model is a machine learning model for predicting the probability distribution or the approximate or alternative index thereof of the observation value, by using any one of a posterior distribution of a prediction value based on a Bayesian theory, a distribution of a prediction value of a predictor configuring an ensemble, a theoretical formula of a prediction interval and a confidence interval of a regression model, a Monte Carlo dropout, and a distribution of a prediction of a plurality of predictors constructed in different conditions.

**4.** The design assistance device according to any one of claims 1 to 3,
wherein the prediction model is a single task model for predicting the observation value of one characteristic item as the probability distribution or the approximate or alternative index thereof, or a multitask model for predicting the observation values of a plurality of characteristic items as the probability distribution or the approximate or alternative index thereof.

**5.** The design assistance device according to any one of claims 1 to 4,

wherein the design parameter group candidate generation unit
generates a plurality of design parameter group candidates by implementing multi-objective optimization according to a predetermined first method of the multi-objective optimization once, or
generates a plurality of design parameter group candidates by performing multi-objective optimization according to a second method of the multi-objective optimization different from the first method a plurality of times, in different conditions.

**6.** The design assistance device according to claim 5,
wherein the design parameter group candidate generation unit implements the multi-objective optimization for the design parameter group by applying a genetic algorithm to the plurality of acquisition functions.

**7.** The design assistance device according to claim 5,
wherein the design parameter group candidate generation unit generates one predetermined objective function for treating the multi-objective optimization as single objective optimization, on the basis of the plurality of acquisition functions, and generates a plurality of design parameter group candidates by performing the single objective optimization for the design parameter group having output of the objective function as the object variable a plurality of times, in different conditions.

**8.** The design assistance device according to any one of claims 1 to 7,
wherein the selection unit calculates the achievement probability with respect to the target value of each of the characteristic items, on the basis of the probability distribution or the approximate or alternative index thereof of the observation value obtained by inputting the design parameter group candidate to the prediction model of each of the characteristic items, and calculates the total achievement probability for each of the design parameter group candidates, on the basis of the achievement probability of each of the characteristic items.

**9.** The design assistance device according to any one of claims 1 to 8,
wherein the selection unit selects a plurality of design parameter group candidates including the design parameter group candidate with the highest total achievement probability from the plurality of design parameter group candidates by a predetermined algorithm.

**10.** The design assistance device according to any one of claims 1 to 9,
wherein the acquisition function construction unit constructs the acquisition function including any one of lower confidence bound (LCB), expected improvement (EI), and probability of improvement (PI).

**11.** The design assistance device according to any one of claims 1 to 10,
wherein the acquisition function construction unit constructs the acquisition function including a cost value relevant to a cost including at least any one of time and a cost according to the production of the product, the in-process product, the half-finished product, the component, or the trial product, generated in accordance with the design parameter group, the acquisition function for outputting the index value indicating that a degree of suitability of the design parameter group decreases as the cost value increases.

**12.** A design assistance method in a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product, the method comprising:

a data acquisition step of acquiring a plurality of performance data pieces including the design parameter group and an observation value of each of the plurality of characteristic items, for the produced product, in-process product, half-finished product, component, or trial product;

a model construction step of constructing a prediction model for predicting the observation value of the characteristic item as a probability distribution or an approximate or alternative index thereof on the basis of the design parameter group, on the basis of the performance data;

an acquisition function construction step of constructing an acquisition function having the design parameter group as input and an index value of the design parameter group relevant to improvement of the characteristic indicated in the characteristic item as output, for each of the characteristic items, on the basis of at least the prediction model;

a design parameter group candidate generation step of generating a plurality of design parameter group candidates by multi-objective optimization for the design parameter group having output of each of a plurality of acquisition functions as an object variable;

a selection step of calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and

an output step of outputting the selected design parameter group candidate.

**13.** A design assistance program for causing a computer to function as a design assistance device obtaining a plurality of design parameters satisfying a target value set for each of a plurality of characteristic items indicating a characteristic of a product, an in-process product, a half-finished product, a component, or a trial product produced on the basis of a design parameter group including the plurality of design parameters, in order to apply to a method for optimizing a design parameter by repeating determination of the design parameter and production of the product, the in-process product, the half-finished product, the component, or the trial product based on the determined design parameter, in design of the product, the in-process product, the half-finished product, the component, or the trial product,

the design assistance program causing the computer to attain:

a data acquisition function of acquiring a plurality of performance data pieces including the design parameter group and an observation value of each of the plurality of characteristic items, for the produced product, in-process product, half-finished product, component, or trial product;

a model construction function of constructing a prediction model for predicting the observation value of the characteristic item as a probability distribution or an approximate or alternative index thereof on the basis of the design parameter group, on the basis of the performance data;

an acquisition function construction function of constructing an acquisition function having the design parameter group as input and an index value of the design parameter group relevant to improvement of the characteristic indicated in the characteristic item as output, for each of the characteristic items, on the basis of at least the prediction model;

a design parameter group candidate generation function of generating a plurality of design parameter group candidates by multi-objective optimization for the design parameter group having output of each of a plurality of acquisition functions as an object variable;

a selection function of calculating a total achievement probability, which is a probability that the target values of all of the characteristic items are achieved, for each of the design parameter group candidates, on the basis of the probability distribution or the approximate or alternative index thereof of the observation value obtained by inputting the design parameter group candidate to the prediction model, to select at least one design parameter group candidate with the highest total achievement probability; and

an output function of outputting the selected design parameter group candidate.

*Fig.1*

# Fig.2

**10**

DESIGN ASSISTANCE DEVICE

PROCESSOR ～101

DATA ACQUISITION UNIT ～11

MODEL CONSTRUCTION UNIT ～12

ACQUISITION FUNCTION CONSTRUCTION UNIT ～13

DESIGN PARAMETER GROUP CANDIDATE GENERATION UNIT ～14

SELECTION UNIT ～15

OUTPUT UNIT ～16

DESIGN PARAMETER STORAGE UNIT ～21

OBSERVATION VALUE STORAGE UNIT ～22

# Fig.3

10

| 101 | PROCESSOR |
| 102 | MAIN STORAGE DEVICE |
| 103 | AUXILIARY STORAGE DEVICE |
| 104 | COMMUNICATION CONTROL DEVICE |
| 105 | INPUT DEVICE |
| 106 | OUTPUT DEVICE |

**Fig.4**

| DESIGN PARAMETER IN FIRST TO (T-1)-TH MATERIAL PRODUCTION | DESIGN PARAMETER GROUP | | | |
|---|---|---|---|---|
| | COMPOUND AMOUNT OF RAW MATERIAL A | COMPOUND AMOUNT OF RAW MATERIAL B | . . . | DESIGN PARAMETER d |
| $X_1$ | . . . | . . . | . . . | . . . |
| $X_2$ | . . . | . . . | . . . | . . . |
| $X_3$ | . . . | . . . | . . . | . . . |
| ⋮ | . . . | . . . | . . . | . . . |
| $X_{T-1}$ | . . . | . . . | . . . | . . . |

## Fig.5

EP 4 246 363 A1

| NUMBER OF TIMES OF OBSERVATION | OBSERVATION VALUE $y_{m,t}$ OF CHARACTERISTIC ITEM (1 to M) | | | |
| --- | --- | --- | --- | --- |
| | GLASS TRANSITION TEMPERATURE (m=1) | BONDING ADHESIVE FORCE (m=2) | ... | CHARACTERISTIC ITEM M (m=M) |
| 1 | $y_{1,1}$ | $y_{2,1}$ | ... | $y_{M,1}$ |
| 2 | $y_{1,2}$ | $y_{2,2}$ | ... | $y_{M,2}$ |
| 3 | $y_{1,3}$ | $y_{2,3}$ | ... | $y_{M,3}$ |
| : | : | : | : | : |
| T-1 | $y_{1,T-1}$ | $y_{2,T-1}$ | ... | $y_{M,T-1}$ |
| TARGET VALUE | $y_{1(target)}$ | $y_{2(target)}$ | ... | $y_{M(target)}$ |

# Fig.6

```
        ┌─────────┐
        │  START  │
        └─────────┘
             │
   ┌────────►│
   │         ▼
   │  ┌──────────────────────┐
   │  │   ACQUIRE DESIGN     │ ~S1
   │  │  PARAMETER GROUP     │
   │  └──────────────────────┘
   │         │
   │         ▼
   │  ┌──────────────────────┐
   │  │  PERFORM MATERIAL    │ ~S2
   │  │ PRODUCTION (EXPERIMENT)│
   │  └──────────────────────┘
   │         │
   │         ▼
   │  ┌──────────────────────┐
   │  │ ACQUIRE OBSERVATION VALUE│ ~S3
   │  │ OF CHARACTERISTIC ITEM│
   │  └──────────────────────┘
   │         │
   │         ▼
   │       ╱────╲  S4
   │      ╱  IS  ╲
   │     ╱PREDETERMINED╲  YES
   │     ╲END CONDITION╱─────────┐
   │      ╲SATISFIED?╱           │
   │       ╲────╱                │
   │         │ NO                │
   │         ▼                   │
   │  ┌──────────────────────┐   │
   │  ││ PERFORM DESIGN      ││ ~S5│
   │  ││ASSISTANCE PROCESSING││   │
   │  └──────────────────────┘   │
   │         │                   │
   └─────────┘                   │
                                 ▼
                           ┌─────────┐
                           │   END   │
                           └─────────┘
```

# Fig.7

```
┌─────────────────────────┐
│   DESIGN ASSISTANCE     │
│      PROCESSING         │
└─────────────────────────┘
             │
┌─────────────────────────────────────────┐
│ ACQUIRE PERFORMANCE DATA INCLUDING       │
│ PAIR OF DESIGN PARAMETER GROUP AND       │── S11
│ OBSERVATION VALUE OF EACH                │
│ CHARACTERISTIC ITEM                      │
└─────────────────────────────────────────┘
             │
┌─────────────────────────────────────────┐
│      CONSTRUCT PREDICTION MODEL          │── S12
└─────────────────────────────────────────┘
             │
┌─────────────────────────────────────────┐
│   CONSTRUCT ACQUISITION FUNCTION         │
│   FOR EACH CHARACTERISTIC ITEM,          │── S13
│   ON BASIS OF PREDICTION MODEL           │
└─────────────────────────────────────────┘
             │
┌─────────────────────────────────────────┐
│       IMPLEMENT MULTI-OBJECTIVE          │
│   OPTIMIZATION FOR DESIGN PARAMETER      │── S14
│   GROUP INCLUDING OUTPUT OF EACH         │
│ ACQUISITION FUNCTION AS OBJECT VARIABLE  │
└─────────────────────────────────────────┘
             │
┌─────────────────────────────────────────┐
│ CALCULATE TOTAL ACHIEVEMENT PROBABILITY, │
│   WHICH IS SIMULTANEOUS ACHIEVEMENT      │
│   PROBABILITY OF TARGET VALUE OF EACH    │
│   CHARACTERISTIC ITEM, ON BASIS OF       │── S15
│ PROBABILITY DISTRIBUTION OF OBSERVATION  │
│   VALUE OBTAINED BY INPUTTING DESIGN     │
│  PARAMETER GROUP CANDIDATE TO EACH       │
│           PREDICTION MODEL               │
└─────────────────────────────────────────┘
             │
┌─────────────────────────────────────────┐
│ SELECT AT LEAST ONE DESIGN PARAMETER     │
│    GROUP CANDIDATE WITH HIGHEST          │── S16
│   TOTAL ACHIEVEMENT PROBABILITY          │
└─────────────────────────────────────────┘
             │
┌─────────────────────────────────────────┐
│  OUTPUT SELECTED DESIGN PARAMETER        │
│ GROUP CANDIDATE AS DESIGN PARAMETER      │── S17
│ GROUP FOR NEXT MATERIAL PRODUCTION       │
└─────────────────────────────────────────┘
             │
        ┌─────────┐
        │   END   │
        └─────────┘
```

# Fig.8

RECORDING MEDIUM — M1

DESIGN ASSISTANCE PROGRAM — P1

MAIN MODULE — m10

DATA ACQUISITION MODULE — m11

MODEL CONSTRUCTION MODULE — m12

ACQUISITION FUNCTION CONSTRUCTION MODULE — m13

DESIGN PARAMETER GROUP CANDIDATE GENERATION MODULE — m14

SELECTION MODULE — m15

OUTPUT MODULE — m16

## INTERNATIONAL SEARCH REPORT

| International application No. |
| --- |
| **PCT/JP2021/042983** |

| A. | CLASSIFICATION OF SUBJECT MATTER |
| --- | --- |

*G06F 30/27*(2020.01)i
FI:   G06F30/27

According to International Patent Classification (IPC) or to both national classification and IPC

| B. | FIELDS SEARCHED |
| --- | --- |

Minimum documentation searched (classification system followed by classification symbols)

G06F30/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2019/088185 A1 (HITACHI LTD) 09 May 2019 (2019-05-09)<br>paragraphs [0033]-[0184], fig. 1-19 | 1-13 |
| A | JP 2014-6825 A (HITACHI LTD) 16 January 2014 (2014-01-16)<br>paragraphs [0018]-[0073], fig. 1-16 | 1-13 |
| A | JP 2016-45536 A (HITACHI LTD) 04 April 2016 (2016-04-04)<br>paragraphs [0018]-[0039] | 1-13 |
| A | JP 2016-200902 A (YOKOHAMA RUBBER CO LTD) 01 December 2016 (2016-12-01)<br>entire text, all drawings | 1-13 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 February 2022** | **15 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/042983**

| Patent document cited in search report | | | Publication date (day/month/year) | Patent family member(s) | | | Publication date (day/month/year) |
|---|---|---|---|---|---|---|---|
| WO | 2019/088185 | A1 | 09 May 2019 | JP 2019-86817 A paragraphs [0033]-[0184], fig. 1-19 | | | |
| JP | 2014-6825 | A | 16 January 2014 | US 2014/0005816 A1 paragraphs [0034]-[0085], fig. 1-16 | | | |
| JP | 2016-45536 | A | 04 April 2016 | (Family: none) | | | |
| JP | 2016-200902 | A | 01 December 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020052737 A